# EUROPÄISCHE PATENTSCHRIFT

(11) **EP 3 469 972 B1**
(45) Veröffentlichungstag und Bekanntmachung des Hinweises auf die Patenterteilung: **11.01.2023**
(21) Anmeldenummer: 18194695.5
(22) Anmeldetag: 17.09.2018
(51) Int. Cl.: A47L 5/00, A47L 9/00, A47L 9/28

(54) **VERFAHREN UND VORRICHTUNG ZUM LADEN EINER ENERGIESPEICHEREINRICHTUNG ZUR VERWENDUNG IN EINEM REINIGUNGSGERÄT UND REINIGUNGSGERÄT MIT EINER VORRICHTUNG**
METHOD AND DEVICE FOR CHARGING AN ENERGY STORAGE DEVICE FOR USE IN A CLEANING IMPLEMENT AND CLEANING IMPLEMENT WITH A DEVICE
PROCÉDÉ ET DISPOSITIF DE CHARGE D'UN DISPOSITIF ACCUMULATEUR D'ÉNERGIE DESTINÉ À ÊTRE UTILISÉ DANS UN APPAREIL DE NETTOYAGE ET APPAREIL DE NETTOYAGE DOTÉ D'UN DISPOSITIF

(30) Priorität: 11.10.2017 DE 102017123665
(43) Veröffentlichungstag der Anmeldung: 17.04.2019
(73) Patentinhaber: Miele & Cie. KG, 33332 Gütersloh (DE)
(72) Erfinder: Agethen, Michael, 32602 Vlotho (DE); Buchholz, Thomas, 33378 Rheda-Wiedenbrück (DE)

(56) Entgegenhaltungen:
- EP-A1- 3 185 096
- EP-A1- 3 412 193
- EP-A1- 3 512 399
- KR-A- 20090 115 526
- US-A1- 2012 158 915
- US-A1- 2017 071 431

## Beschreibung

Der hier vorgestellte Ansatz betrifft ein Verfahren und eine Vorrichtung zum Laden einer Energiespeichereinrichtung zur Verwendung in einem Reinigungsgerät und ein Reinigungsgerät mit einer Vorrichtung.

Saugroboter werden entweder mit einem Netzteil oder einer Ladestation ausgeliefert.

Hierüber werden die Geräte geladen. Es werden verschiedene Akkutechnologien eingesetzt, wobei der Lithium-Ionen-Akkumulator mittlerweile, bis auf wenige Ausnahmen, fast ausschließlich eingesetzt wird. Sehr viele Saugroboter lassen eine Planung der Reinigungszeiten mittels Timer zu. Sowohl tagesgenaue als auch einfachere tägliche Timer werden verwendet. Am Markt sind erste Saugroboter erhältlich, die eine Reinigungskarte erstellen. Teilweise werden diese nur als Anzeige der gereinigten Fläche verwendet, andere lassen eine Interaktion zu. Die bekannten Geräte und Verfahrensweisen führen entweder nach einem Reinigungsdurchgang selbstständig eine vollständige Wiederaufladung des Akkumulators über die Ladestation durch, oder müssen vom Benutzer über ein Netzteil aktiv aufgeladen werden.

Die Druckschrift US 2017/071431 A1 (im Folgenden als D1 bezeichnet) offenbart ein Verfahren zum Laden einer Energiespeichereinrichtung zur Verwendung in einem Reinigungsgerät, wobei das Verfahren die Schritte aufweist: Einlesen eines Energiebedarfsignals und Ausgeben eines Ladesignals unter Verwendung des Energiebedarfsignals, wobei das Ladesignal ein Laden der Energiespeichereinrichtung abhängig vom Energiebedarfssignal bewirkt.

Die Druckschrift US 2012/0158915 A1 offenbart ein Verfahren zum Laden einer Energiespeichereinrichtung zur Verwendung in einem Reinigungsgerät, wobei das Verfahren die Schritte aufweist, Einlesen eines Energiebedarfssignals, wobei das Energiebedarfssignal von einem vorliegenden Ladezustand der Energiespeichereinrichtung abhängt, und Ausgeben eines Ladesignals. Nachteilig ist hierbei, dass kein Laden der Energiespeichereinrichtung vorgesehen wird, bei dem lediglich die für einen Reinigungsvorgang notwendige Energie geladen wird. Die Druckschriften EP 3 512 399 A1 und EP 3 412 193 A1 offenbaren Verfahren zum Laden von Energiespeichern von Saugrobotern, bei dem das Laden des Energiespeichers in Abhängigkeit von einem Reinigungsplan oder einer Reinigungsroute erfolgt.

Dem hier vorgestellten Ansatz liegt die Aufgabe zugrunde, ein verbessertes Verfahren und eine verbesserte Vorrichtung zum Laden einer Energiespeichereinrichtung zur Verwendung in einem Reinigungsgerät und ein Reinigungsgerät mit einer verbesserten Vorrichtung zu schaffen.

Erfindungsgemäß wird diese Aufgabe durch ein Verfahren nach Anspruch 1 zum Laden einer Energiespeichereinrichtung zur Verwendung in einem Reinigungsgerät, ferner eine Vorrichtung nach Anspruch 6 zum Laden einer Energiespeichereinrichtung zur Verwendung in einem Reinigungsgerät gelöst. Gegenstand der vorliegenden Erfindung ist auch ein Computerprogramm nach Anspruch 8. Vorteilhafte Ausgestaltungen und Weiterbildungen der Erfindung ergeben sich aus den nachfolgenden Unteransprüchen.

Die mit dem hier vorgestellten Ansatz erreichbaren Vorteile bestehen darin, dass durch eine Anwendung eines hier vorgestellten Verfahrens ein Kapazitätsverlust einer Energiespeichereinrichtung reduziert wird und somit eine Lebensdauer der Energiespeichereinrichtung erhöht wird.

Ein Verfahren zum Laden einer Energiespeichereinrichtung zur Verwendung in einem Reinigungsgerät weist einen Schritt des Einlesens und einen Schritt des Ausgebens auf. Im Schritt des Einlesens wird ein Energiebedarfsignal eingelesen, das eine notwendige Energie des Reinigungsgeräts für einen vorbestimmten Reinigungsdurchgang repräsentiert. Im Schritt des Ausgebens wird unter Verwendung des Energiebedarfsignals ein Ladesignal ausgegeben, das ein Laden der Energiespeichereinrichtung abhängig von der notwendigen Energie bewirkt.

Dieses Verfahren kann beispielsweise in Software oder Hardware oder in einer Mischform aus Software und Hardware beispielsweise in einem Steuergerät implementiert sein.

Bei der Energiespeichereinrichtung kann es sich um eine wieder aufladbare Batterie, beispielsweise um einen Lithium-Ionen-Akkumulator handeln. Bei dem Reinigungsgerät kann es sich um einen Saugroboter handeln. Wenn eine Energiespeichereinrichtung wie hier vorgestellt lediglich soviel geladen wird, wie für den vorbestimmten Reinigungsdurchgang, also eine Reinigungsfahrt, benötigt wird, bedeutet dies, dass die Energiespeichereinrichtung in einem möglichst wenig belastenden Spannungsbereich geladen wird. Dies wiederum ermöglicht eine längere zu erwartende Lebenszeit der Energiespeichereinrichtung. Bei dem vorbestimmten Reinigungsdurchgang kann es sich um einen bevorstehenden Reinigungsdurchgang handeln. Das Ladesignal kann an eine Schnittstelle zu einer Ladeeinrichtung für die Energiespeichereinrichtung ausgegeben werden.

Der Schritt des Ausgebens kann beendet werden, sobald die notwendige Energie in die Energiespeichereinrichtung geladen wurde. Auf diese Weise kann ein vollständiges Aufladen der Energiespeichereinrichtung verhindert werden. Stattdessen kann lediglich soviel Energie in die Energiespeichereinrichtung geladen werden, wie für den vorbestimmten Reinigungsdurchgang erforderlich ist.

Um einen gewissen Grundladezustand der Energiespeichereinrichtung bereitstellen zu können und um zu verhindern, dass die Energiespeichereinrichtung in einem minimalen Ladezustand gelagert wird, weist das Verfahren erfindungsgemäß den Schritt des Bereitstellens auf, in dem ein Aufladesignal bereitgestellt wird, das ein Aufladen der Energiespeichereinrichtung nur bis zu einem vorbestimmten Lagerladezustand bewirkt. Das Aufladesignal kann bereitgestellt werden, sobald der Lagerladezustand, beispielsweise innerhalb eines Toleranzbereichs von 20%, unterschritten wird. Der Lagerladezustand repräsentiert einen Ladezustand von in etwa 30 % der Kapazität der Energiespeichereinrichtung.

Somit kann das Laden der Energiespeichereinrichtung beendet werden, sobald der Lagerladezustand erreicht ist, der nicht einem vollständig geladenen Zustand der Energiespeichereinrichtung entspricht. Wird bei einem bevorstehenden vorbestimmten Reinigungsdurchgang die notwendige Energie in die den Lagerzustand aufweisende Energiespeichereinrichtung geladen, so wird die Energiespeichereinrichtung durch Ausführen des vorbestimmten Reinigungsdurchgangs soweit entladen, das sich die Energiespeichereinrichtung wieder in dem Lagerzustand befindet.

Um das Energiebedarfsignal bereitstellen zu können, kann das Verfahren einen Schritt des Bestimmens aufweisen, in dem die für den vorbestimmten Reinigungsdurchgang notwendige Energie bestimmt wird. Beispielsweise kann die notwendige Energie unter Verwendung einer erstellten Reinigungsroute und/oder einem gespeicherten Reinigungsplan bestimmt werden. Bei der Reinigungsroute kann es sich um eine Reinigungskarte handeln, beispielsweise einen hinterlegten Grundriss einer zu reinigenden Fläche. Der gespeicherte Reinigungsplan kann ein von einem Benutzer ausgewählter Reinigungsplan sein, der beispielsweise Reinigungsaufgaben und/oder Reinigungszyklen umfassen kann.

Die notwendige Energie kann im Schritt des Bestimmens beispielsweise als eine für den vorbestimmten Reinigungsdurchgang bislang durchschnittlich benötigte Energie bestimmt werden. Die notwendige Energie kann aber auch direkt als eine bereits gespeicherte Information eingelesen werden.

Im Schritt des Einlesens wird gemäß einer vorteilhaften Ausführungsform außerdem ein Zeitsignal eingelesen, das eine Reinigungszeit des vorbestimmten Reinigungsdurchgangs repräsentiert. Dabei kann der Schritt des Ausgebens unter Verwendung des Zeitsignals, beispielsweise in einem zeitlichen Verhältnis zu der Reinigungszeit, ausgeführt werden. Bei der Reinigungszeit kann es sich um einen Zeitpunkt handeln, zu dem der vorbestimmte Reinigungsdurchgang voraussichtlich begonnen wird. Die Reinigungszeit kann aus dem Reinigungsplan ausgelesen werden. Vorteilhafterweise kann der Schritt des Ausgebens hierbei vor einem Erreichen der Reinigungszeit ausgeführt werden, um die notwendige Energie vor der Reinigungszeit bereitstellen zu können. Zusätzlich oder alternativ kann das Zeitsignal eine Zeitdauer des vorbestimmten Reinigungsdurchgangs anzeigen und die notwendige Energie kann unter Verwendung der Zeitdauer bestimmt werden.

Erfindungsgemäß weist das Verfahren außerdem einen Schritt des Empfangens auf, in dem ein Ladezeitsignal empfangen wird, das eine ermittelte Ladezeit zum Laden der notwendigen Energie repräsentiert. Dabei erfolgt der Schritt des Ausgebens unter Verwendung des Ladezeitsignals-beispielsweise in einem weiteren zeitlichen Verhältnis zu der ermittelten Ladezeit vor der Reinigungszeit.

Dies kann sicherstellen, dass das Reinigungsgerät vor dem Erreichen der Reinigungszeit auch über die notwendige Energie verfügt.

Beispielsweise kann die Ladezeit in einem Schritt des Ermittelns bereitgestellt werden, in dem die Ladezeit unter Verwendung der notwendigen Energie und/oder eines Parameters der Energiespeichereinrichtung ermittelt wird.

Um das Laden an die spezifisch verwendete Energiespeichereinrichtung anzupassen, kann das Verfahren einen Schritt des Ermittelns aufweisen, in dem eine maximal aufnehmbare Kapazität und/oder ein aktuell aufgenommener Ladezustand der Energiespeichereinrichtung ermittelt wird. Im Schritt des Ausgebens kann das Ladesignal ausgegeben werden, das ein Laden der Energiespeichereinrichtung abhängig von der maximal aufnehmbaren Kapazität und/oder dem aktuell aufgenommenen Ladezustand bewirkt.

Von Vorteil ist es weiterhin, wenn das Verfahren einen Schritt des Speicherns aufweist, in dem eine den vorbestimmten Reinigungsdurchgangweitere repräsentierende Reinigungszeit und/oder Reinigungsroute, die beispielsweise einen wiederholten manuell angewendeten Gebrauch des Reinigungsgeräts repräsentiert, in einen Reinigungsplan gespeichert wird. So kann sichergestellt werden, dass zu Zeiten eines häufigen manuell initiierten Gebrauchs des Reinigungsgeräts unter Verwendung des vorgestellten Verfahrens eine hierfür entsprechende notwendige Energie bereitgestellt werden kann.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. In einer vorteilhaften Ausgestaltung erfolgt durch die Vorrichtung eine Steuerung eines Ladesignals. Hierzu kann die Vorrichtung beispielsweise auf Sensorsignale wie ein Energiebedarfsignal zugreifen. Die Ansteuerung erfolgt über Aktoren wie eine Einleseeinrichtung zum Einlesen des Energiebedarfsignals und eine Ausgabeeinrichtung zum Ausgeben des Ladesignals.

Ein Reinigungsgerät, insbesondere ein Saugroboter, weist die vorgestellte Vorrichtung auf. Ein hier vorgestelltes Reinigungsgerät kann als Ersatz für bekannte Reinigungsgeräte dienen, wobei das vorgestellte Reinigungsgerät vorteilhafterweise die Vorteile der Vorrichtung realisiert und somit eine Lebensdauer einer Energiespeichereinrichtung des Reinigungsgeräts erhöht ist.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, wenn das Programmprodukt oder Programm auf einer entsprechenden Vorrichtung eines Reinigungsgerätes ausgeführt wird.

Ausführungsbeispiele des Ansatzes sind in den Zeichnungen rein schematisch dargestellt und werden nachfolgend näher beschrieben. Es zeigt
- Figur 1: eine schematische Darstellung eines Reinigungsgeräts mit einer Vorrichtung zum Laden einer Energiespeichereinrichtung gemäß einem Ausführungsbeispiel;
- Figur 2 bis 3: eine schematische Querschnittdarstellung einer Energiespeichereinrichtung gemäß einem Ausführungsbeispiel;
- Figur 4: ein Diagramm von Ladezuständen einer Energiespeichereinrichtung über der Zeit gemäß einem Ausführungsbeispiel; und
- Figur 5: ein Ablaufdiagramm eines Verfahrens zum Laden einer Energiespeichereinrichtung zur Verwendung in einem Reinigungsgerät gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

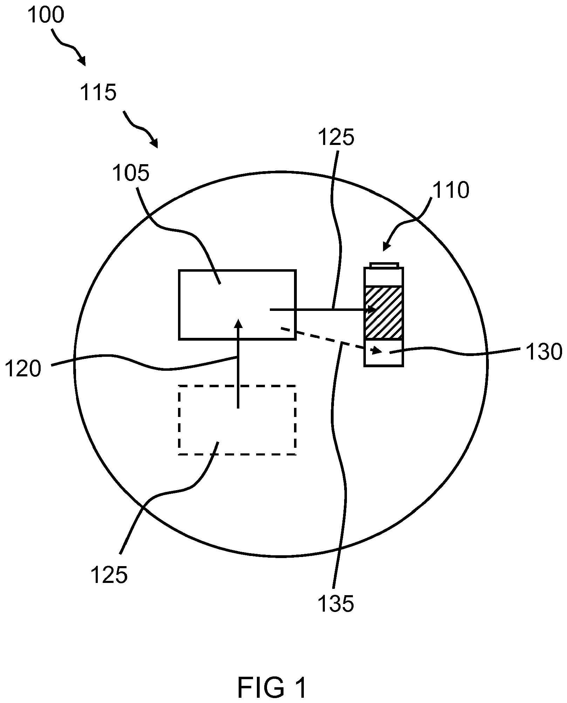

Figur 1 zeigt eine schematische Darstellung eines Reinigungsgeräts 100 mit einer Vorrichtung 105 zum Laden einer Energiespeichereinrichtung 110 gemäß einem Ausführungsbeispiel. Die Vorrichtung 105 ist gemäß unterschiedlicher Ausführungsbeispiele Teil des Reinigungsgeräts 100 oder Teil einer extern zu dem Reinigungsgeräts 100 angeordneten Ladeeinrichtung zum Laden der Energiespeichereinrichtung 110 des Reinigungsgeräts 100.

Die Energiespeichereinrichtung 110 und die Vorrichtung 105 sind gemäß diesem Ausführungsbeispiel in oder an dem Reinigungsgerät 100 aufgenommen, welches gemäß diesem Ausführungsbeispiel als ein Saugroboter 115 ausgeformt ist.

Die Vorrichtung 105 ist dazu ausgebildet, um das Laden der Energiespeichereinrichtung 110 des Saugroboters 115 zu bewirken. Hierzu ist die Vorrichtung 105 dazu ausgebildet, um ein Energiebedarfsignal 120 einzulesen, das eine notwendige Energie des Saugroboters 115 für einen vorbestimmten Reinigungsdurchgang repräsentiert. Bei dem vorbestimmten Reinigungsdurchgang kann es sich um einen bevorstehenden Reinigungsdurchgang handeln. Die notwendige Energie kann so bemessen sein, dass sie bei Ausführung des vorbestimmten Reinigungsdurchgangs vollständig genutzt wird. Des Weiteren ist die Vorrichtung 105 dazu ausgebildet, um ein Ladesignal 125 auszugeben, das das Laden der Energiespeichereinrichtung 110 abhängig von der notwendigen Energie bewirkt. Das Ladesignal 125 kann ein Laden der Energiespeichereinrichtung 110 bewirken, bis die notwendigen Energie zusätzlich zu einer bereits in der Energiespeichereinrichtung 110 vorhandenen Energie in die Energiespeichereinrichtung 110 geladen wurde. Sobald die notwendige Energie in die Energiespeichereinrichtung 110 geladen wurde, kann das Ausgeben des Ladesignals 125 und somit das weitere Laden der Energiespeichereinrichtung 110 beendet werden.

Gemäß diesem Ausführungsbeispiel ist die Vorrichtung 105 dazu ausgebildet, um die notwendige Energie unter Verwendung einer erstellten Reinigungsroute 125 und/oder eines gespeicherten Reinigungsplans zu bestimmen. Dazu können die Reinigungsroute 125 und/oder der gespeicherte Reinigungsplan als digitale Daten vorliegen.

Im Folgenden werden optionale Ausführungsbeispiele anhand der Figur 1 nochmals mit anderen Worten beschrieben:
In Saugrobotern können, wie bei dem hier gezeigten Saugroboter 115 und wie bei vielen akkubetriebenen Produkten, vornehmlich Lithium-Ionen-Akkumulatoren als Energiespeichereinrichtung 110, im Folgenden auch kurz "Akkus" genannt, zur Energieversorgung eingesetzt werden. Eine Alterung bzw. ein Kapazitätsverlust dieser Akkus ist teilweise begrenzend für eine Lebensdauer oder führt zu einem teuren Nachkauf eines Ersatzakkus.

Die Lebensdauer bzw. der Kapazitätsverlust eines Lithium-Ionen-Akkus wird durch zwei Parameter maßgeblich bestimmt. Zum einen ist eine kalendarische Alterung und zum anderen eine Anzahl sowie eine Art (Ladestrom, Spannungsbereiche) der Ladezyklen entscheidend. Die Lagerung eines Akkus von einem Jahr hat einen ähnlichen Kapazitätsverlust zur Folge, wie 100 Ladezyklen. Beide Parameter können durch Informationen aus der Anwendung des Saugroboters positiv beeinflusst werden, sodass die Lebensdauer eines Akkus signifikant steigt bzw. der Kapazitätsverlust sinkt.

Für einen geringen Kapazitätsverlust ist es vorteilhaft, Lithium-Ionen-Akkus bei einem Ladestand oder Ladezustand von ca. 30% SOC, engl. "State of Charge", zu lagern, um eine kalendarische Alterung zu minimieren. Um den Kapazitätsverlust durch das Laden und Entladen zu minimieren, ist es weiterhin von Vorteil, nur einen Teil und nicht die maximalen sowie minimalen Spannungsbereiche der Akkus, bzw. der Akkuzellen des Akkus, zu verwenden.

Saugroboter können mit einer Ladestation ausgerüstet werden, die zu einer vollständigen Ladung des Akkus nach Beendigung der Reinigungsfahrt führt. D. h., der Spannungsbereich des Akkus wird ausgenutzt und er wird bei 100% SOC quasi gelagert.

Demgegenüber wird die Energiespeichereinrichtung 110 des hier vorgestellten Saugroboters 115 durch die Vorrichtung 105 bis zu einem vorbestimmten Lagerladezustand 130 von gemäß diesem Ausführungsbeispiel lediglich 30% SOC geladen, sofern kein vorbestimmter Reinigungsdurchgang bevorsteht, zu dessen Ausführung ein höherer Ladezustand der Energiespeichereinrichtung 110 erforderlich ist. Hierzu ist die Vorrichtung 105 dazu ausgebildet, um ein Aufladesignal 135 auszugeben, das ein Aufladen der Energiespeichereinrichtung 110 bis zu dem vorbestimmten Lagerladezustand 130 bewirkt, sobald der Lagerladezustand 130 unterschritten wird. Gemäß diesem Ausführungsbeispiel repräsentiert der vorbestimmte Lagerladezustand 130 30% der Kapazität der Energiespeichereinrichtung 110.

Da dieser Zustand einen Großteil der Lebenszeit des Gerätes umfasst, ist dieser geringe Lagerladezustand 130 somit optimal für die Langlebigkeit des Akkus.

Mit Informationen über die notwendige Energie für einen durchschnittlichen Reinigungsdurchgang und eine Startzeit einer Reinigung, die aus einer Reinigungskarte in Form der Reinigungsroute 125 und/oder dem vom Benutzer gespeicherten Reinigungsplan stammen, kann der Akku in seinen optimalen Bereichen gelagert und durch das Ladesignal 125 nur die für einen Reinigungsvorgang notwendige Energie in dem Akku gespeichert werden.

Die Vorrichtung 105 realisiert demnach gemäß einem Ausführungsbeispiel eine Ladestrategie aus den Informationen der Anwendung des Saugroboters 115 über die im Durchschnitt benötigte Reinigungsenergie sowie den Reinigungsplan und den Ladevorgang.

Somit ist es nicht erforderlich das nach einem Reinigungsdurchgang eine vollständige Wiederaufladung der Energiespeichereinrichtung 110 über die Ladestation durchgeführt wird oder vom Benutzer über ein Netzteil aktiv erfolgt. Die Lagerung des Akkus bei 100% SOC würde die kalendarische Alterung im Vergleich zu einer durch die Vorrichtung 105 vorteilhafterweise ermöglichten Lagerung bei lediglich ca. 30% SOC erheblich erhöhen.

Es folgt ein Beispiel: Wenn der Saugroboter 115 täglich ein Mal für eine Stunde fährt und die Ladezeit hierfür zwei Stunden beträgt, bedeutet dies, dass ohne den hier beschriebenen Ansatz die Lagerung bei 100% SOC pro Tag 21 Stunden beträgt und damit insgesamt fast 90% der Lebenszeit.

Wie bereits beschrieben, findet die Ladung der Geräte-Akkus bei Geräten häufig bis zur maximal definierten Ladespannung des Akkus statt. Gerade eine Verwendung in dem oberen definierten Spannungsbereich bzw. bis zur Ladeschlussspannung ist nachteilig für die Kapazität eines Lithium-Ionen-Akkus.

Die hier vorgestellte Vorrichtung 105 ermöglicht nun, dass die Ladung des Geräte-Akkus in Form der Energiespeichereinrichtung 110 nur in einem möglichst wenig belastenden Spannungsbereich stattfindet. Zudem wird ausschließlich die notwendige Energie für einen Reinigungsvorgang bzw. Reinigungsdurchgang in der Energiespeichereinrichtung 110 gespeichert.

Insgesamt wird so durch eine Optimierung dieser Parameter der Kapazitätsverlust der Energiespeichereinrichtung 110 reduziert und damit die Lebensdauer des Akkus erhöht.

Zusammengefasst bedeutet dies, dass durch ein Nutzen von Informationen über die notwendige Energie für einen Reinigungsdurchgang und die vom Nutzer geplanten Startzeiten für die Reinigung, der Akku in optimalen Spannungsbereichen gelagert und nur die für einen Reinigungsdurchgang notwendige Energie in dem Akku gespeichert wird. Die Informationen stammen aus kunden- bzw. anwendungsspezifischen Roboterdaten des Saugroboters 115.

Konkret bedeutet dies: Die relevante Startzeit für das Gerät wird gemäß diesem Ausführungsbeispiel von der Vorrichtung 105 aus den Zeiten eines vom Kunden programmierten Timers ermittelt. Gemäß diesem Ausführungsbeispiel wird die Energiespeichereinrichtung 110 des Saugroboters 115 erst passend zum Start des Saugroboters 115 bis zum notwendigen SOC aufgeladen. Die für den Reinigungsvorgang notwendige Energie wird aus den vorangegangenen Reinigungen vom Roboter selbst ermittelt.

Es folgt ein Beispiel: Der Saugroboter 115 startet jeden Morgen um 9 Uhr laut Reinigungsplan des Nutzers und benötigt 50% der Akkukapazität. Zum Laden der Energiemenge benötigt der Saugroboter 115 zwei Stunden. Der Saugroboter 115 wird nun von 7 Uhr bis 9 Uhr von 30% auf 80% SOC geladen. Anschließend macht der Saugroboter 115 seine Reinigungsfahrt, hierbei werden die 80% auf 30% SOC entladen und die Energiespeichereinrichtung 110 verbleibt bis zum nächsten Morgen um 7 Uhr bei 30% SOC. Dieses ist ein theoretisches Beispiel und kann auf die Toleranzen im realen Betriebsumfeld optimiert werden.

Anspruchsvollere Prozesse, wie das Erlernen von Gebrauchsmustern des Kunden oder die Ermittlung eines wahrscheinlichen Einsatzes sind ebenfalls als Grundlage für die Ladestrategie möglich. Beispiel: Der Kunde saugt jeden Abend nach einem manuellen Befehl zwischen 18.30 Uhr und 20.00 Uhr nach dem Abendessen unter dem Esstisch. Die Vorrichtung 105 ist dazu ausgebildet, um dieses Verhalten zu erlernen und die Ladestrategie entsprechend diesem Muster zu ändern, also den Zeitpunkt der Ladung und Energie.

Die Energiespeichereinrichtung 110 wird gemäß einem Ausführungsbeispiel während des Lagerladezustands 130 in einen Akku-Schon-Modus versetzt.

Es folgt erneut ein Beispiel: Eine übliche Ladeschlussspannung einer Lithium-Ionen-Akkuzelle liegt bei 4,2 V. Wird diese nur bis zu 4,1 V betrieben, so verdoppelt sich die Anzahl der Ladezyklen bis zu einem Kapazitätsverlust von 20 % (80 % State of health). Werden wiederum 0,1 V des Spannungsbereiches weniger genutzt, so verdoppelt sich die Zyklenbeständigkeit wiederum. Insgesamt ist mit dem von der Vorrichtung 105 durchführbaren oder ansteuerbaren Verfahren also eine Vervielfachung der möglichen Ladezyklen bis zu einem kritischen Kapazitätsverlust möglich. Die Lebensdauer von Produkten bzw. des Akkus des Saugroboters 115 wird somit erhöht.

Gemäß einem alternativen Ausführungsbeispiel ist der Saugroboter 115 als ein anderer Haushaltsroboter oder ein Akkusauger oder ein Handstick oder ein Handheld ausgeformt.

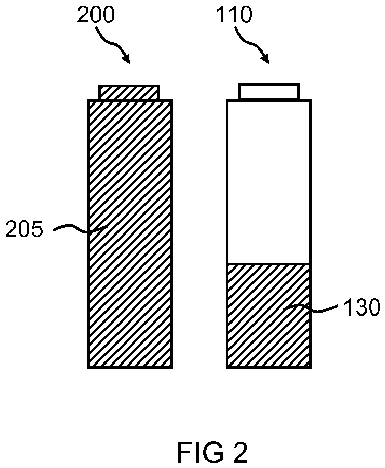

Figur 2 zeigt eine schematische Querschnittdarstellung einer Energiespeichereinrichtung 110 gemäß einem Ausführungsbeispiel. Dabei kann es sich um die in Figur 1 beschriebene Energiespeichereinrichtung 110 handeln, bei der ein Lagerladezustand 130 von 30% durch die in Fig. 1 beschriebene Vorrichtung bewirkt wurde.

Links neben der Energiespeichereinrichtung 110 ist zum Vergleich eine Energiespeichereinrichtung 200 dargestellt, die einen Lagerladezustand 205 von 100% SOC aufweist, der im Unterschied zu dem hier vorgestellten Ansatz zu einer schnellen Alterung der Energiespeichereinrichtung 200 führt

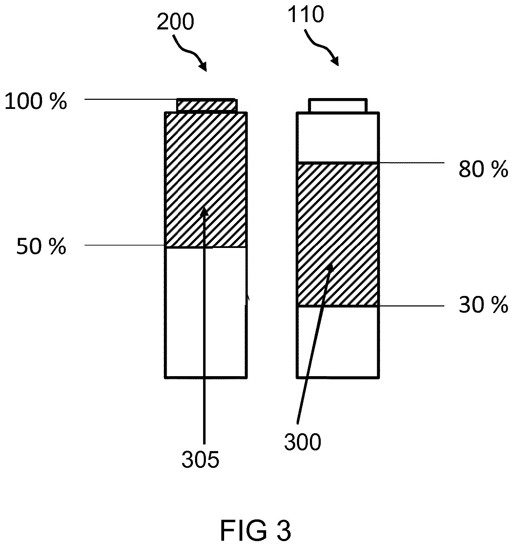

Figur 3 zeigt eine schematische Querschnittdarstellung einer Energiespeichereinrichtung 110 gemäß einem Ausführungsbeispiel. Dabei kann es sich um die in Fig 1 gezeigte Energiespeichereinrichtung 110 mit der geladenen notwendigen Energie handeln. Bei der bekannten Energiespeichereinrichtung 200 handelt es sich um die in Fig. 2 gezeigte bekannte Energiespeichereinrichtung 200.

Bei der Energiespeichereinrichtung 110 wird bei einem Reinigungsdurchgang vorteilhafterweise ein mittlerer Spannungsbereich 300 der Energiespeichereinrichtung 110 genutzt. Bei der links gezeigten Energiespeichereinrichtung 200 hingegen wird bei einem Reinigungsdurchgang ein maximaler Spannungsbereich 305 der Energiespeichereinrichtung 200 genutzt.

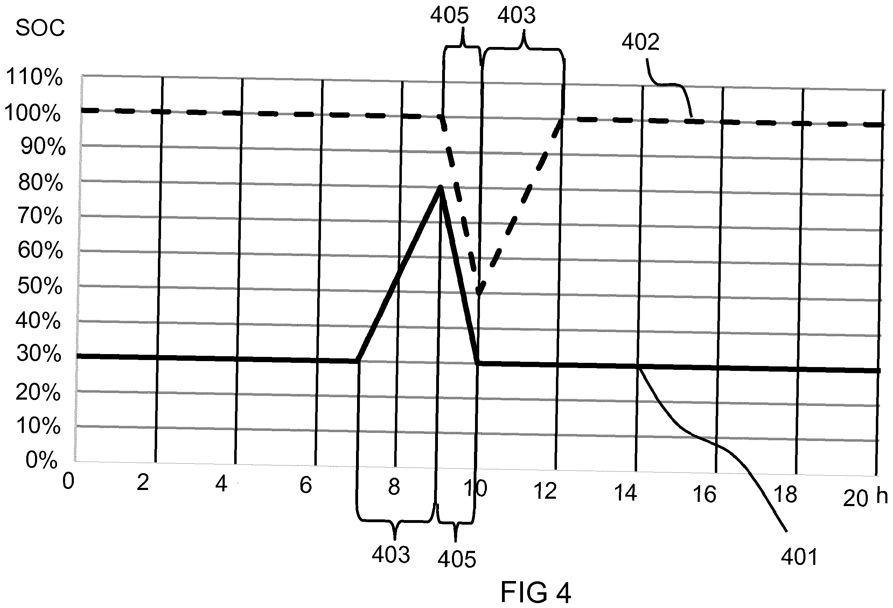

Figur 4 zeigt ein Diagramm von Ladezuständen SOC einer Energiespeichereinrichtung über der Zeit h gemäß einem Ausführungsbeispiel. Dabei kann es sich um die anhand einer der vorangegangenen Figuren beschriebene Energiespeichereinrichtung handeln.

Die Ladezustände SOC der Energiespeichereinrichtung sind durch eine durchgezogene Linie 401 gekennzeichnet. Weitere Ladezustände einer alternativen Energiespeichereinrichtung, die ohne den hier beschriebenen Ansatz betrieben wird, sind durch eine gestrichelte Linie 402 gekennzeichnet. Gegenübergestellt sind hierbei jeweils Ladezustände SOC während eines Ladevorgangs 403 der Energiespeichereinrichtung und während eines Betriebs 405 des Reinigungsgeräts, während dem die Energiespeichereinrichtung entladen wird.

Der Linie 401 ist zu entnehmen, dass die Energiespeichereinrichtung, solange kein Reinigungsdurchgang bevorsteht, in dem Lagerladezustand von hier beispielhaft 30% gehalten wird. Gemäß diesem Ausführungsbeispiel beginnt der Reinigungsdurchgang um 9 Uhr und endet um 10 Uhr. Den restlichen Tag findet kein Reinigungsdurchgang statt. Der Zeitpunkt des Beginns des Reinigungsdurchgangs ist gemäß einem Ausführungsbeispiel eine vorbekannte Reinigungszeit, die verwendet wird, um die Energiespeichereinrichtung rechtzeitig vor Beginn des Reinigungsdurchgangs mit der für den Reinigungsdurchgang erforderlichen notwendigen Energie zu laden. Dabei wir der Ladevorgang 403 gemäß einem Ausführungsbeispiel so gestartet, dass der Ladevorgang 403 genau oder in einem vorbestimmten Zeitintervall vor Beginn des Reinigungsdurchgangs abgeschlossen ist. Das vorbestimmte Zeitintervall kann beispielsweise kleiner als eine Stunde sein. Gemäß dem hier beschriebenen Ansatz wird die Energiespeichereinrichtung ausgehend von dem Lagerladezustand nur mit der notwendigen Energie geladen, hier beispielhaft bis 80%. Die Energiespeichereinrichtung wird also bis zu einem Ladezustand geladen, der dem Lagerladezustand zuzüglich der notwendigen Energie entspricht. Vorteilhafterweise wird der Energiespeichereinrichtung diese während des Ladevorgangs zugeladene notwendige Energie während des Reinigungsvorgangs wieder entzogen, sodass die Energiespeichereinrichtung nach Beendigung des Reinigungsvorgangs wieder zumindest annähernd den Lagerladezustand erreicht hat. Wenn die Energiespeichereinrichtung nach dem Reinigungsvorgang einen von dem Lagerzustand abweichenden Ladezustand aufweist, wird die Energiespeichereinrichtung nach Beendigung des Reinigungsvorgangs optional entladen oder optional geladen, um den Lagerzustand zu erreichen.

Im Unterschied dazu stellt die Linie 402 einen Ladezustand einer Energiespeichereinrichtung dar, die einen Lagerzustand von 100% aufweist. Hier wird die Energiespeichereinrichtung direkt nach Beendigung des Reinigungsvorgangs wieder vollständig aufgeladen.

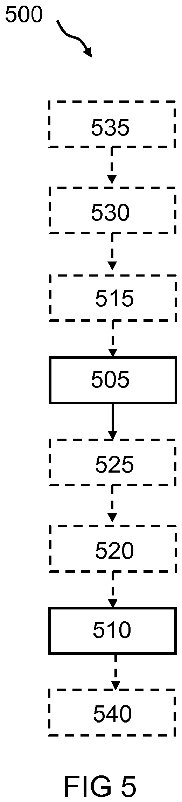

Figur 5 zeigt ein Ablaufdiagramm eines Verfahrens 500 zum Laden einer Energiespeichereinrichtung zur Verwendung in einem Reinigungsgerät gemäß einem Ausführungsbeispiel. Dabei kann es sich um ein Verfahren 500 handeln, das von der in Figur 1 beschriebenen Vorrichtung ansteuerbar oder ausführbar ist. Das hier vorgestellte Verfahren 500 kann auch als ein Verfahren zur Erhöhung der Akkulebensdauer bei Saugrobotern durch eine Reinigungsplanung bezeichnet werden.

Das Verfahren 500 weist zumindest einen Schritt 505 des Einlesens und einen Schritt 510 des Ausgebens auf. Im Schritt 505 des Einlesens wird ein Energiebedarfsignal eingelesen, das eine notwendige Energie des Reinigungsgeräts für einen Reinigungsdurchgang repräsentiert. Im Schritt 510 des Ausgebens wird ein Ladesignal ausgegeben, das ein Laden der Energiespeichereinrichtung abhängig von der notwendigen Energie bewirkt.

Die im Folgenden beschriebenen Ausführungsbeispiele und zusätzlichen Schritte sind optional.

Gemäß diesem Ausführungsbeispiel wird im Schritt 505 des Einlesens ein Zeitsignal eingelesen, das eine Reinigungszeit der Reinigungsfahrt repräsentiert, wobei der Schritt 510 des Ausgebens in einem zeitlichen Verhältnis zu der Reinigungszeit ausgeführt wird.

Gemäß diesem Ausführungsbeispiel umfasst das Verfahren 500 weiterhin einen Schritt 515 des Bestimmens, in dem die notwendige Energie unter Verwendung einer erstellten Reinigungsroute und/oder eines gespeicherten Reinigungsplans bestimmt wird.

Außerdem umfasst das Verfahren 500 gemäß diesem Ausführungsbeispiel einen Schritt 520 des Empfangens, in dem ein Ladezeitsignal empfangen wird, das eine ermittelte Ladezeit zum Laden der notwendigen Energie repräsentiert, wobei der Schritt 510 des Ausgebens in einem weiteren zeitlichen Verhältnis zu der ermittelten Ladezeit vor der Reinigungszeit ausgeführt wird.

Gemäß diesem Ausführungsbeispiel umfasst das Verfahren 500 zudem einen Schritt 525 des Ermittelns, in dem die Ladezeit unter Verwendung der notwendigen Energie und/oder eines Parameters der Energiespeichereinrichtung ermittelt wird.

Weiterhin umfasst das Verfahren 500 gemäß diesem Ausführungsbeispiel einen Schritt 530 des Aufladens, in dem ein Aufladesignal ausgegeben wird, das ein Aufladen der Energiespeichereinrichtung bis zu einem vorbestimmten Lagerladezustand bewirkt, sobald der Lagerladezustand unterschritten wird.

Gemäß diesem Ausführungsbeispiel umfasst das Verfahren 500 zudem einen Schritt 535 des weiteren Ermittelns, in dem eine maximal aufnehmbare Kapazität und/oder ein aktuell aufgenommener Ladezustand der Energiespeichereinrichtung ermittelt wird, wobei im Schritt 505 des Ausgebens das Ladesignal ausgegeben wird, das ein Laden der Energiespeichereinrichtung abhängig von der maximal aufnehmbaren Kapazität und/oder dem aktuell aufgenommenen Ladezustand bewirkt.

Letztlich umfasst das Verfahren 500 gemäß diesem Ausführungsbeispiel einen Schritt 540 des Speicherns, in dem eine weitere Reinigungszeit und/oder weitere Reinigungsroute in einen Reinigungsplan gespeichert wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß zweier weiterer Ausführungsformen entweder nur das erste Merkmal oder nur das zweite Merkmal aufweist.

## Patentansprüche

1. Verfahren (500) zum Laden einer Energiespeichereinrichtung (110) zur Verwendung in einem Reinigungsgerät (100), wobei das Verfahren (500) die folgenden Schritte aufweist:
Bereitstellen eines Aufladesignals (135), das ein Aufladen der Energiespeichereinrichtung (110) nur bis zu einem vorbestimmten Lagerladezustand (130) bewirkt,
sofern kein vorbestimmter Reinigungsvorgang bevorsteht, zu dessen Ausführung ein höherer Ladezustand der Energiespeichereinrichtung als der Lagerladezustand erforderlich ist, wobei der Lagerladezustand einen Ladezustand der Energiespeichereinrichtung repräsentiert, bei dem die Energiespeichereinrichtung zu in etwa 30% der Kapazität der Energiespeichereinrichtung geladen ist;
und
Einlesen (505) eines Energiebedarfsignals (120), das eine notwendige Energie des Reinigungsgeräts (100) für einen vorbestimmten Reinigungsdurchgang repräsentiert; und
Empfangens eines Ladezeitsignals, das eine ermittelte Ladezeit zum Laden der notwendigen Energie repräsentiert; und
Ausgeben (510) eines Ladesignals (125) unter Verwendung des Energiebedarfsignals (120), wobei das Ladesignal (125) ein Laden der Energiespeichereinrichtung (110) abhängig von der notwendigen Energie und unter Verwendung des Ladezeitsignals bewirkt.

2. Verfahren (500) gemäß Anspruch 1, bei dem der Schritt des Ausgebens (510) beendet wird, sobald die notwendige Energie in die Energiespeichereinrichtung (110) geladen wurde.

3. Verfahren (500) gemäß einem der der vorangegangenen Ansprüche, mit einem Schritt (515) des Bestimmens der für den vorbestimmten Reinigungsdurchgang notwendigen Energie.

4. Verfahren (500) gemäß einem der der vorangegangenen Ansprüche, bei dem im Schritt (505) des Einlesens ein Zeitsignal eingelesen wird, das eine Reinigungszeit des vorbestimmten Reinigungsdurchgangs repräsentiert, wobei der Schritt (510) des Ausgebens unter Verwendung des Zeitsignals ausgeführt wird.

5. Verfahren (500) gemäß einem der vorangegangenen Ansprüche, mit einem Schritt (540) des Speicherns, in dem eine den vorbestimmten Reinigungsdurchgang repräsentierende Reinigungszeit und/oder Reinigungsroute in einen Reinigungsplan gespeichert wird.

6. Vorrichtung (105), die ausgebildet ist, um die Schritte des Verfahrens (500) gemäß einem der vorangegangenen Ansprüche in entsprechenden Reinigungsgeräten anzusteuern und/oder auszuführen.

7. Reinigungsgerät (100), insbesondere Saugroboter (115), mit einer Vorrichtung (105) gemäß Anspruch 6.

8. Computer-Programmprodukt mit Programmcode zur Durchführung des Verfahrens (500) nach einem der Ansprüche 1-5, wenn das Computer-Programmprodukt auf einer Vorrichtung nach Anspruch 6 ausgeführt wird.

## Claims

1. Method (500) for charging an energy storage device (110) for use in a cleaning appliance (100), wherein the method (500) has the following steps:
providing a charging signal (135) which causes the energy storage device (110) to be charged only up to a predetermined storage charge state (130), provided that no predetermined cleaning process is imminent, the execution of which requires a higher charging state of the energy storage device than the storage charge state, wherein the storage charge state represents a charge state of the energy storage device at which the energy storage device is charged to approximately 30% of the capacity of the energy storage device; and
reading in (505) an energy consumption signal (120) which represents the energy required by the cleaning appliance (100) for a predetermined cleaning cycle; and receiving a charging time signal which represents an established charging time for charging the required energy; and
outputting (510) a charging signal (125) using the energy consumption signal (120), wherein the charging signal (125) causes the energy storage device (110) to be charged depending on the required energy and using the charging time signal.

2. Method (500) according to claim 1, in which the outputting step (510) is terminated once the required energy has been charged into the energy storage device (110).

3. Method (500) according to either of the preceding claims, comprising a step (515) of determining the energy required for the predetermined cleaning cycle.

4. Method (500) according to any of the preceding claims, in which during the reading-in step (505), a time signal is read in which represents a cleaning time of the predetermined cleaning cycle, wherein the outputting step (510) is carried out using the time signal.

5. Method (500) according to any of the preceding claims, comprising a storage step (540) in which a cleaning time and/or cleaning route representing the predetermined cleaning cycle is stored in a cleaning plan.

6. Device (105) which is designed to control or carry out the steps of the method (500) according to any of the preceding claims in corresponding cleaning appliances.

7. Cleaning appliance (100), in particular a robotic vacuum cleaner (115), comprising a device (105) according to claim 6.

8. Computer-program product comprising a program code for carrying out the method (500) according to any of claims 1 to 5 when the computer-program product is run on a device according to claim 6.

## Revendications

1. Procédé (500) de charge d'un dispositif accumulateur d'énergie (110) destiné à être utilisé dans un appareil de nettoyage (100), dans lequel le procédé (500) comporte les étapes suivantes :
la fourniture d'un signal de recharge (135), lequel amène une recharge du dispositif accumulateur d'énergie (110) uniquement jusqu'à un état de charge de stockage (130) prédéterminé, à condition qu'aucun processus de nettoyage prédéterminé ne soit imminent, dont la réalisation nécessite un état de charge du dispositif accumulateur d'énergie supérieur à l'état de charge de stockage, dans lequel l'état de charge de stockage représente un état de charge du dispositif accumulateur d'énergie, dans lequel le dispositif accumulateur d'énergie est chargé jusqu'à environ 30 % de la capacité du dispositif accumulateur d'énergie ; et
la lecture (505) d'un signal de besoin en énergie (120), lequel représente l'énergie nécessaire de l'appareil de nettoyage (100) pour un cycle de nettoyage prédéterminé ; et la réception d'un signal de temps de charge, lequel représente un temps de charge déterminé pour la charge de l'énergie nécessaire ; et
l'émission (510) d'un signal de charge (125) en fonction du signal de besoin en énergie (120), dans lequel le signal de charge (125) amène une charge du dispositif accumulateur d'énergie (110) en fonction de l'énergie nécessaire et en fonction du signal de temps de charge.

2. Procédé (500) selon la revendication 1, dans lequel l'étape d'émission (510) est terminée une fois que l'énergie nécessaire a été chargée dans le dispositif accumulateur d'énergie (110).

3. Procédé (500) selon l'une des revendications précédentes, comportant une étape (515) de détermination de l'énergie nécessaire pour le cycle de nettoyage prédéterminé.

4. Procédé (500) selon l'une quelconque des revendications précédentes, dans lequel, à l'étape (505) de lecture, un signal temporel est lu, lequel représente un temps de nettoyage du cycle de nettoyage prédéterminé, l'étape (510) d'émission étant réalisée en fonction du signal temporel.

5. Procédé (500) selon l'une quelconque des revendications précédentes, comportant une étape (540) de mémorisation, dans laquelle un temps de nettoyage et/ou un parcours de nettoyage représentant le cycle de nettoyage prédéterminé sont mémorisés dans un plan de nettoyage.

6. Dispositif (105) conçu pour commander et/ou pour mettre en œuvre les étapes du procédé (500) selon l'une quelconque des revendications précédentes dans des appareils de nettoyage correspondants.

7. Appareil de nettoyage (100), en particulier robot aspirateur (115), comportant un dispositif (105) selon la revendication 6.

8. Produit de programme informatique comportant un code de programme permettant de mettre en œuvre le procédé (500) selon l'une quelconque des revendications 1 à 5, lorsque le produit de programme informatique est exécuté sur un dispositif selon la revendication 6.
